Europäisches Patentamt

European Patent Office

Office européen des brevets

(11) Publication number: **0 385 065 B1**

# EUROPEAN PATENT SPECIFICATION

(45) Date of publication of patent specification: **12.01.94**

(51) Int. Cl.5: **C08F 283/08**, C08G 65/48, C08J 9/18, C08J 9/20, //(C08F283/08,212:04)

(21) Application number: **90100401.0**

(22) Date of filing: **10.01.90**

(54) Method of preparing beads of polyphenylene ether-polystyrene, beads thus formed.

(30) Priority: **01.03.89 NL 8900497**

(43) Date of publication of application:
**05.09.90 Bulletin 90/36**

(45) Publication of the grant of the patent:
**12.01.94 Bulletin 94/02**

(84) Designated Contracting States:
**DE ES FR GB IT NL**

(56) References cited:
**EP-A- 0 261 574
EP-A- 0 294 783
US-A- 3 384 682
US-A- 4 148 843**

(73) Proprietor: **GENERAL ELECTRIC COMPANY
1 River Road
Schenectady, N.Y. 12151(US)**

(72) Inventor: **Avakian, Roger W.
General Electric Plastics B.V., P.O. Box 117
NL-4600 AC Bergen op Zoom(NL)**
Inventor: **Claesen, Christianus Adrianus Arnoldus
General Electric Plastics B.V., P.O. Box 117
NL-4600 AC Bergen op Zoom(NL)**
Inventor: **Kite, Neil Tony Geoffrey
General Electric Plastics B.V., P.O. Box 117
NL-4600 AC Bergen op Zoom(NL)**
Inventor: **Viersen, Frits Jan
General Electric Plastics B.V., P.O. Box 117
NL-4600 AC Bergen op Zoom(NL)**

(74) Representative: **Pratt, Richard Wilson et al
London Patent Operation
G.E. Technical Services Co. Inc.
Essex House
12/13 Essex Street
London WC2R 3AA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# EP 0 385 065 B1

## Description

The invention relates to a method of preparing beads built up substantially from a polymer mixture of a polyphenylene ether and a polyvinylaromatic compound, in which a polyphenylene ether is mixed with a vinylaromatic monomer and is suspended in an aqueous medium; a suspension polymerisation catalyst is added; the vinylaromatic monomer is polymerised and the suspended particles are separated from the resulting suspension.

The invention also relates to a method of preparing expandable fine beads in which during or after the preparation according to the above-mentioned method an easily volatilisable hydrocarbon or halogenated hydrocarbon is incorporated in the particles.

EP-A-294783 discloses a method of preparing expandable thermoplastic beads consisting substantially of a polyphenylene ether and a vinylaromatic polymer. In the known method a polyphenylene ether together with a vinylaromatic monomer is suspended in an aqueous medium. According to this prior art so-called capped polyphenylene ethers may be used as a polyphenylene ether. Such capped polyphenylene ethers and methods of preparing the same are generally known. For this purpose reference may be made, for example, to US-A-3,375,228, US-A-4,048,143 and US-A-4,760,118. The use of capped polyphenylene ethers has been found to present advantages in the suspension polymerisation of vinylaromatic monomers. It had already been found in the bulk polymerisation of vinylaromatic monomers in the presence of a polyphenylene ether that the use of capped polyphenylene ethers presents advantages (see US-A-4,148,843). However, the use of capped polyphenylene ethers requires an extra reaction step after the preparation of the polyphenylene ether.

It has been found that the capping of the polyphenylene ether, resulting in a decrease of the content of terminal hydroxyl groups, may also be carried out in the presence of the vinylaromatic monomer before the suspension polymerisation catalyst is added. This means that an extra preparation step in a separate reactor can be avoided.

The method according to the invention is characterised in that the content of terminal hydroxyl groups of the polyphenylene ether before suspending in the aqueous medium in the presence of the vinylaromatic monomer is decreased by the addition of a capping agent.

The polyphenylene ether may be capped while forming, for example, an O-C, O-P or O-Si bond from the phenolic hydroxyl groups which usually are present in the polyphenylene ether. O-C ester bonds can be obtained by reaction of the phenolic hydroxyl groups with acid chlorides or acid anhydride in the presence of a base. O-C ether bonds can be obtained, for example, by reaction with dimethyl sulphate in the presence of a base. O-P bonds can be obtained by reaction with, for example, $POCl_3$. O-Si bonds can be obtained by reaction with silylating agents, for example, bis(trimethylsilyl) sulphate, trimethyl chlorosilane, and trimethyl silylcyanide. The above-mentioned reactions are known per se.

The capping reaction is preferably carried out by the addition of an acid anhydride or acid chloride in combination with an organic base.

A secondary or tertiary amine, for example, a trialkylamine, pyridine, N,N-dialkylamine pyridine is preferably used as an organic base.

In the method according to the invention a polyphenylene ether is used. Polyphenylene ethers are generally known polymers. Suitable polyphenylene ethers are described, for example, in the above-mentioned EP-A-294,783 and the literature references mentioned therein. Polyphenylene ethers usually have terminal hydroxyl groups, sometimes referred to as phenolic terminal groups. Polyphenylene ethers having such terminal groups are used as a starting material in the method according to the invention.

In the method according to the invention a suspension is prepared of the polyphenylene ether and a vinylaromatic monomer. The weight ratio of the polyphenylene ether and the vinylaromatic monomer in the suspension may be chosen between 5-80 and 95-20; said ratio preferably is between 10-60 and 90-40. Examples of suitable vinylaromatic monomers are styrene, alpha-methyl styrene, ethyl styrene, halogenated styrene compounds, vinyltoluene, and mixtures of one or more of these compounds. It is also possible to use a mixture consisting of at least 50% of a vinylaromatic monomer and a monomer which can be copolymerised therewith, for example, acrylonitrile, methylmethacrylate or methylacrylate.

The suspension in aqueous medium can be prepared in various manners, for example, by dissolving a polyphenylene ether in the form of a powder or of particles having a diameter of approximately 0.05-5 mm in the vinylaromatic monomer and suspending the resulting solution in water. In this method a dispersing agent, for example, polyvinyl alcohol, methyl cellulose, and the like, is used. Other possibilities to obtain a suspension are described in EP-A-294783. In the method according to the invention a capping agent is added to the polyphenylene ether, after mixing same with the vinylaromatic monomer, to decrease the content of terminal hydroxyl groups of the polyphenylene ether. This content is preferably reduced to a

2

content of less than 20% of the originally present content.

An acid chloride or an acid anhydride may be added as a capping agent. Suitable capping agents are, for example, acetyl chloride, benzoyl chloride, acetic acid anhydride, (meth)acryloyl chloride. The capping agents are preferably used in combination with an organic base, for example, triethylamine, pyridine, N,N-dimethylamino pyridine.

After the capping reaction the resulting product is processed to beads by means of suspension polymerisation in the manner as described in EP-A-294,783. During or after the polymerisation reaction an easily volatilisable hydrocarbon or halogenated hydrocarbon may be incorporated in the said beads.

The invention will now be described in greater detail with reference to the ensuing specific examples.

Examples

Solutions of 100 g of poly(2,6-dimethyl-1,4-phenylene ether) in 400 g of styrene monomers were prepared. The polyphenylene ether used had an intrinsic viscosity of approximately 0.57 dl per gram measured in a chloroform solution at 25°C. The content of terminal hydroxyl groups was 1735 ppm.

In order to readily dissolve the polyphenylene ether, heating was carried out up to approximately 110°C. At that temperature various capping agents and amines, as indicated in the table herein-after, were added. 300 g of the solution thus obtained were then suspended in 600 ml of water by means of 3 g of polyvinyl alcohol. The polymerisation reaction was carried out by adding 0.75 g of azobis isobutyronitrile. In all the cases a substantially complete polymerisation of the styrene was obtained.

TABLE

| Example | Capping agents (quantity in grammes) | OH content after capping (ppm) | Duration of the capping reaction (min.) | Bead dimension ($\underline{d}$ in mm) |
|---|---|---|---|---|
| 1 | AcCl(6.5)+dmap(10.2) | 105 | 15 | 0.1-1.1 |
| 2 | ditto | less than 50 | 60 | 0.2-0.6 |
| 3 | AcCl(6.5)+tea(8.5) | 55 | 15 | 0.2-4* |
| 4 | ditto | 25 | 30 | 0.2-7* |
| 5 | ditto | 30 | 60 | 0.1-5* |
| 6 | AcCl(6.5).pyr(6.6) | 90 | 15 | 0.2-0.6 |
| 7 | ditto | not determined | 30 | 0.2-1.0 |
| 8 | $Ac_2O$(8.5)+dmap(1) | 85 | 15 | 0.1-0.6 |
| 9 | ditto | 70 | 30 | 0.2-0.5 |
| 10 | ditto | 30 | 60 | 0.1-0.5 |
| 11 | BzCl(11.7)+dmap(10.2) | 130 | 15 | 0.2-1.0 |
| 12 | ditto | not determined | 30 | 0.2-0.8 |

AcCl = acetyl chloride
$Ac_2O$ = acetic acid anhydride
BzCl = benzoyl chloride
dmap = N,N-dimethylamine pyridine

tea = triethyl amine
pyr = pyridine

* non-spherical particles; the largest dimension is indicated

## Claims

1. A method of preparing beads built up substantially from a polymer mixture of a polyphenylene ether and a polyvinylaromatic compound, in which a polyphenylene ether is mixed with a vinylaromatic monomer in a ratio by weight between 5-80 and 95-20 and is suspended in an aqueous medium; a suspension polymerisation catalyst is added; the vinylaromatic monomer is polymerised and the suspended particles are separated from the resulting suspension, characterised in that the content of terminal hydroxyl groups of the polyphenylene ether, before suspending in the aqueous medium in the presence of the vinylaromatic monomer, is decreased to less than 20% of the originally present content by the addition of a capping agent.

2. A method as claimed in Claim 1, characterised in that the content of terminal hydroxyl groups of the polyphenylene ether is decreased by the addition of an acid anhydride or acid chloride in the presence of an organic base compound.

3. A method as claimed in Claim 2, characterised in that N,N-dialkylamino pyridine or pyridine is used as an organic base.

4. A method of preparing expandible beads in which during or after the preparation of the method as claimed in Claim 1 an easily volatilisable hydrocarbon or halogenated hydrocarbon is incorporated in the particles.

**Patentansprüche**

1. Verfahren zur Herstellung von Kügelchen, die im wesentlichen aus einer Polymermischung eines Polyphenylenäthers und einer polyvinylaromatischen Verbindung aufgebaut sind, in welcher ein Polyphenylenäther mit einem vinylaromatischen Monomeren in einem Gewichtsverhältnis zwischen 5 zu 80 und 95 zu 20 gemischt und in einem wäßrigen Medium suspendiert wird; ein Suspensionspolymerisations-Katalysator zugegeben wird; das vinylaromatische Monomere polymerisiert wird und die suspendierten Teilchen von der resultierenden Suspension abgetrennt werden, dadurch gekennzeichnet, daß der Gehalt an endständigen Hydroxylgruppen des Polyphenylenäthers vor dem Suspendieren in dem wäßrigen Medium in Anwesenheit des vinylaromatischen Monomeren auf weniger als 20 % des ursprünglich anwesenden Gehaltes durch Zugabe eines Abdeckmittels vermindert wird.

2. Verfahren nach Anspruch 1, dadurch gekennzeichnet, daß der Gehalt des Polyphenylenäthers an endständigen Hydroxylgruppen durch Zugabe eines Säureanhydrids oder Säurechlorids in Anwesenheit einer organischen Basenverbindung verringert wird.

3. Verfahren nach Anspruch 2, dadurch gekennzeichnet, daß als eine organische Base N,N-Dialkylamino-Pyridin oder Pyridin verwendet wird.

4. Verfahren zur Herstellung expandierbarer Kügelchen, bei dem während oder nach der Durchführung des Verfahrens nach Anspruch 1 ein leicht verdampfbarer Kohlenwasserstoff oder halogenierter Kohlenwasserstoff in die Teilchen einverleibt wird.

**Revendications**

1. Procédé de fabrication de perles constituées essentiellement d'un mélange de polymères, un poly-(phénylène éther) et un composé poly(vinyl-aromatique), procédé dans lequel on mélange un poly-(phénylène éther) avec un monomère vinyl-aromatique, en un rapport pondéral situé entre 5/80 et 95/20, et on met le tout en suspension dans un milieu aqueux, on ajoute un catalyseur de polymérisation en suspension, on fait polymériser le monomère vinyl-aromatique, et on sépare les particules suspendues de la suspension résultante, ledit procédé étant caractérisé en ce que l'on abaisse la teneur en groupes hydroxyles terminaux du poly(phénylène éther), avant de mettre celui-ci en suspension dans le milieu aqueux en présence du monomère vinyl-aromatique, jusqu'à moins de 20 % de la teneur initiale, par addition d'un agent de coiffage.

2. Procédé conforme à la revendication 1, caractérisé en ce que l'on abaisse la teneur en groupes hydroxyles terminaux du poly(phénylène éther) par addition d'un anhydride d'acide ou d'un chlorure d'acide, en présence d'un composé organique basique.

**3.** Procédé conforme à la revendication 2, caractérisé en ce que l'on utilise de la pyridine ou une N,N-dialkylamino-pyridine en tant que base organique.

**4.** Procédé de fabrication de perles expansibles, dans lequel, pendant ou après la fabrication selon un procédé conforme à la revendication 1, on incorpore aux particules un hydrocarbure ou un hydrocarbure halogéné, facilement volatilisable.